# EUROPEAN PATENT APPLICATION

(11) **EP 2 624 647 A1**
(43) Date of publication of application: **07.08.2013**
(21) Application number: 10857677.8
(22) Date of filing: 28.09.2010
(51) Int. Cl.: H04W 72/04, H04W 72/12

(54) **METHOD, DEVICE, TERMINAL, BASE STATION AND SYSTEM FOR CROSS-CARRIER SCHEDULING**

(71) Applicant: Fujitsu Limited, Kawasaki-shi, Kanagawa 211-8588 (JP)
(72) Inventor: LI, Jike, Beijing 100025 (CN); ZHANG, Yuantao, Beijing 100025 (CN); ZHOU, Hua, Beijing 100025 (CN); WU, Jianming, Beijing 100025 (CN)
(74) Representative: Stebbing, Timothy Charles
(86) International application number: PCT/CN2010/077424
(87) International publication number: WO 2012/040914

(57) **Abstract**

A method, device, terminal, base station and system for cross-carrier scheduling are disclosed. Said method for cross-carrier scheduling includes: according to the number of component carriers involved in cross-carrier scheduling, adjusting the size of the control part, which is used for transmitting control information, in the frame corresponding to the component carrier; performing cross-carrier scheduling by utilizing the adjusted control part. According to the present invention, the situation that the number of component carriers involved in cross-carrier scheduling increases can be adapted to, and the block situation caused by no resources for transmitting the control information can be avoided.

## Description

### Field of the Invention

The present invention relates to the field of communication, and more particularly, to a method and device of cross-carrier scheduling in carrier aggregation and relevant terminal, base station and system.

### Background of the Invention

Currently, the carrier aggregation is a focus point of research in research of Long Term Evolution-Advanced (LTE-A) standard in the field of wireless communication.

The carrier aggregation has characteristics of being able to call different carriers to simultaneously transmit data, so that a data transmission rate can be improved.

In the cross-carrier scheduling in the carrier aggregation, it is possible to schedule one carrier and other multiple carriers by this carrier.

Each carrier involved in the cross-carrier scheduling may be referred to as a component carrier, and among the plurality of component carriers, a carrier being capable of scheduling itself and other component carriers is referred to as a primary component carrier, while the scheduled other carriers may be referred to as secondary component carriers.

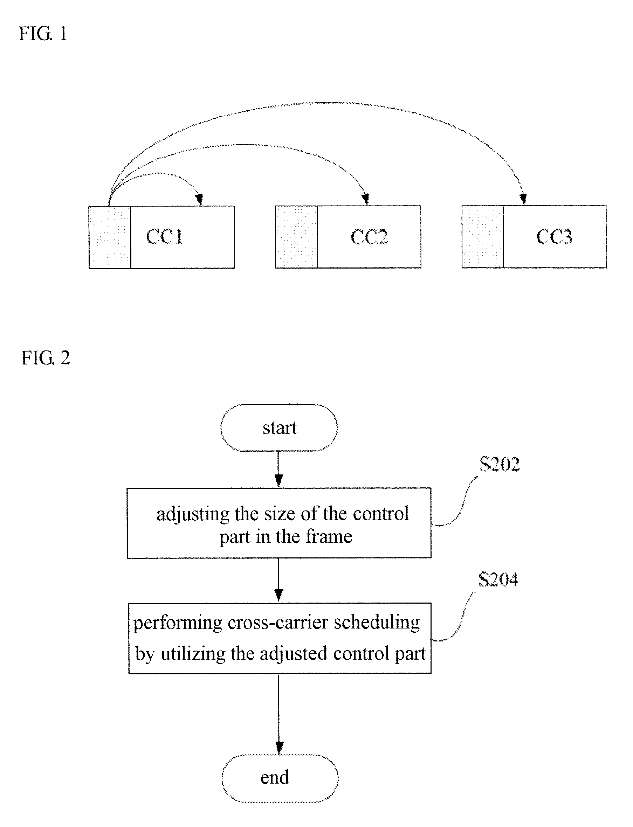

Fig.1 is a schematic diagram illustrating cross-carrier scheduling in the prior art.

In the cross-carrier scheduling as shown in Fig.1, all the component carriers (CC1-CC3) may be scheduled by a primary component carrier (CC1).

As shown in Fig.1, control information may be transmitted by utilizing a control part (shown by shadow portion) in a frame corresponding to the primary component carrier (CC1) so as to achieve scheduling of each carrier.

According to provisions of LTE-A R8, in the cross-carrier scheduling, a maximum length of the control part in the frame is a length of 3 control symbols, wherein the control symbols may be for example Orthogonal Frequency Division Multiplexing (OFDM) symbols.

For the cross-carrier scheduling in which the number of component carriers is small (for example, below 5), the control part whose size is 3 control symbols may achieve efficient scheduling.

With the requirements for wireless communication technologies having higher communication speed, the number of component carriers involved in the cross-carrier scheduling may become larger and larger, for example, may increase to 6, 7, 8 or larger.

In a case that the number of component carriers increases, number of times of blind detection required when a user detects the control information also increases rapidly.

Further, in a case that the number of component carriers is large, if the size of the control part for transmitting the control information in the frame is still defined as the size of three control symbols, in a case of having scheduled the user, a situation of congestion resulted from no resources being used to transmit the control information may occur.

### Summary of the Invention

The brief summary of the invention will be given below to provide basic understanding of some aspects of the invention. However, it shall be appreciated that this summary is neither exhaustively descriptive of the invention nor intended to define essential or important parts or the scope of the invention, but is merely for the purpose of presenting some concepts of the invention in a simplified form and hereby acts as a preamble of more detailed descriptions which will be presented later.

The present invention intends to provide a method and device of cross-carrier scheduling and relevant terminal, base station and system so as to adapt to the situation in which the number of component carriers involved in the cross-carrier scheduling increases.

According to an aspect of the invention, there is provided a method of cross-carrier scheduling, in which a size of a control part for transmitting control information in a frame corresponding to a component carrier is adjusted according to the number of component carriers involved in the cross-carrier scheduling. After that, the cross-carrier scheduling is performed by utilizing the adjusted control part.

According to an aspect of the invention, there is provided a device of cross-carrier scheduling which includes a control part adjusting section and a scheduling section, in which the control part adjusting section may adjust a size of a control part for transmitting control information in a frame corresponding to a component carrier according to the number of component carriers involved in the cross-carrier scheduling, and the scheduling section may perform the cross-carrier scheduling by utilizing the adjusted control part.

According to other aspects of the invention, there are also provided a base station including the device of cross-carrier scheduling described above, a communication terminal capable of receiving information from the base station and a communication system including the terminal and the base station as well as computer program codes, a computer readable storage medium and a computer program product corresponding to the method of cross-carrier scheduling described above.

As can be seen from above, in embodiments of the invention, by adjusting the size of the control part for transmitting the control information in the frame according to the number of component carriers involved in the cross-carrier scheduling so that the size of the control part is adapted to the number of component carriers, it is possible to decrease the number of times of blind detection required when the user detects his own control information and it is also possible to avoid the situation of congestion resulted from no resources being used to transmit the control information.

### Brief Description of the Drawings

Fig.1 is a schematic diagram illustrating the cross-carrier scheduling in the prior art;

Fig.2 is a flow chart illustrating a method of cross-carrier scheduling according to an embodiment of the invention;

Fig.3 is a flow chart illustrating a method of cross-carrier scheduling according to another embodiment of the invention;

Fig.4 is a flow chart illustrating a method of cross-carrier scheduling according to another embodiment of the invention;

Fig.5 is a flow chart illustrating a method of cross-carrier scheduling according to another embodiment of the invention;

Fig.6 is a schematic diagram illustrating a device of cross-carrier scheduling according to an embodiment of the invention;

Fig.7 is a schematic diagram illustrating a device of cross-carrier scheduling according to another embodiment of the invention;

Fig.8 is a schematic diagram illustrating a device of cross-carrier scheduling according to another embodiment of the invention;

Fig.9 is a schematic diagram illustrating a device of cross-carrier scheduling according to another embodiment of the invention; and

Fig.10 is a block diagram of an exemplary structure of a general-purpose personal computer in which the method and/or device according to embodiments of the invention can be implemented.

### Detailed Description of the Invention

Exemplary embodiments of the present invention will be described below in conjunction with the accompanying drawings. For the sake of clarity and conciseness, not all the features of practical implementations are described in the specification. However, it is to be appreciated that numerous implementation-specific decisions shall be made during developing any of such practical implementations so as to achieve the developer's specific goals, for example, to comply with system- and business-relevant constraining conditions which will vary from one implementation to another. Moreover, it shall also be appreciated that such a development effort might be very complex and time-consuming but may simply be a routine task for those skilled in the art benefiting from this disclosure.

It shall further be noted that only those device structures and/or processing steps closely relevant to the solutions of the invention are illustrated in the drawings while other details less relevant to the invention are omitted so as not to obscure the invention due to those unnecessary details.

Fig.2 is a flow chart illustrating a method of cross-carrier scheduling according to an embodiment of the invention.

As shown in Fig.2, in the method of cross-carrier scheduling according to the embodiment, first, at step S202, a size of a control part for transmitting control information in a frame is adjusted.

For example, sizes of control parts of one or more of frames corresponding to component carriers may be adjusted according to the number of component carriers involved in the cross-carrier scheduling.

Next, at step S204, the cross-carrier scheduling may be performed by utilizing the adjusted control part.

For example, the control information for controlling each frame may be transmitted by utilizing the adjusted control part in a frame corresponding to a primary component carrier, thereby realizing the cross-carrier scheduling.

It can be seen from the foregoing embodiments that by adjusting the size of the control part in the frame corresponding to the primary component carrier according to the number of component carriers, it is possible to make the control part in the frame corresponding to the primary component carrier adapt to the number of component carriers involved in the cross-carrier scheduling.

Thus, it is possible to avoid the congestion condition resulted from the size of the control part in the frame corresponding to the primary component carrier being small while the number of scheduled component carriers being large during the cross-carrier scheduling.

In the foregoing method, the processing of adjusting the size of the control part for transmitting the control information in the frame may be implemented by adjusting the number of control symbols in the frame.

For example, in one embodiment of the invention, the number of control symbols for transmitting the control information in the frame corresponding to the primary component carrier may be increased.

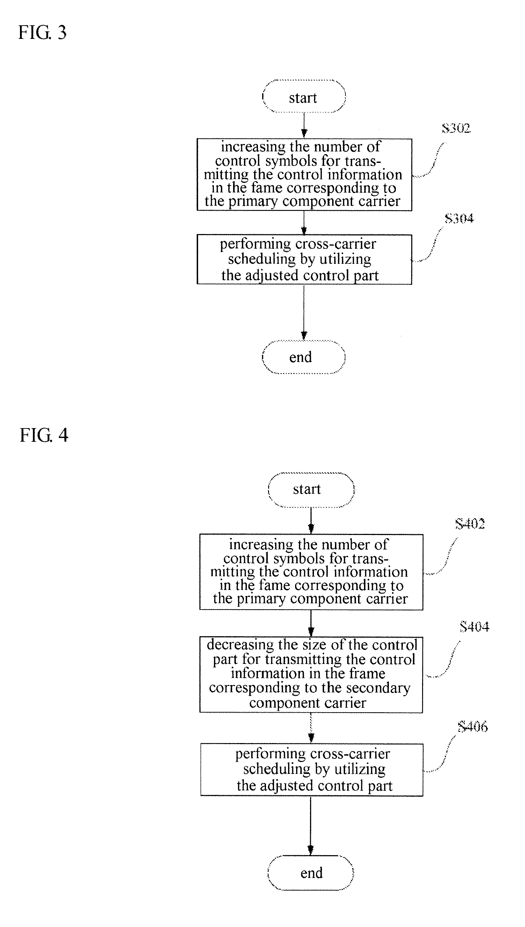

Fig.3 is a flow chart illustrating a method of cross-carrier scheduling according to an embodiment of the invention.

As shown in Fig.3, at step S302, the number of control symbols for transmitting the control information in the frame corresponding to the primary component carrier is increased.

In the LTE-A R8 standard, the length of the control part for transmitting the control information in the frame is defined as a length of three control symbols (i.e., OFDM symbols). Such length of the control part is preferably suitable for a situation in which the number of component carriers is small, for example, a case in which the number of the scheduled component carriers is below five.

However, in the embodiments of the invention, in order to adapt to a larger number of component carriers and to avoid the congestion resulted from the larger number of the component carriers, the number of control symbols included in the control part in the frame corresponding to the primary component carrier may be increased.

Preferably, the number of control symbols included in the control part in the frame corresponding to the primary component carrier may be increased to 3 or more, for example, the number of control symbols may be 4, 5, 6, 7 or other integer larger than 3.

As an example, the length of the control part in the frame corresponding to the primary component carrier may also be increased to a length of the whole frame. That is to say, this frame only includes control symbols (e.g., OFDM symbols) for transmitting the control information and includes no data content. Accordingly, the component carrier corresponding to this frame may be a component carrier dedicatedly for transmitting the control information.

Returning back to Fig.3, next, at step S304, the cross-carrier scheduling is performed by utilizing the adjusted control part.

Specifically, the control information is transmitted by utilizing control symbols the number of which has been increased in the frame corresponding to the primary component carrier, thus realizing the cross-carrier scheduling.

In the method of cross-carrier scheduling described above, since the number of control symbols in the control part in the frame corresponding to the primary component carrier has been increased, the control part of this frame may transmit more control information, and thus more component carriers may be scheduled, and it is therefore possible to avoid the situation of congestion resulted from no resources being used to transmit the control information.

In another embodiment of the invention, the method of cross-carrier scheduling according to the invention may further include a processing of correspondingly decreasing the size of the control part for transmitting the control information in a frame corresponding to a secondary component carrier.

Fig.4 is a flow chart illustrating the method of cross-carrier according to the embodiment of the invention.

As shown in Fig.4, at step S402, the number of control symbols for transmitting the control information in the frame corresponding to the primary component carrier may be increased.

The processing of step S402 may be similar to that of step S302 described previously, and no repeated description will be made herein to keep the specification to be concise.

Next, at step S404, the size of the control part for transmitting the control information in the frame corresponding to the secondary component carrier may be adjusted correspondingly.

For example, in a case that the number of control symbols for transmitting the control information in the frame corresponding to the primary component carrier has been increased, the size of the control part for transmitting the control information in the frame corresponding to the secondary component carrier may be decreased correspondingly.

According to the provisions of LTE-A R8 protocol, the size of the control part for transmitting the control information in the frame is defined as a size of three control symbols (i.e., OFDM symbols). For example, the three control symbols may be the first, second and third OFDM symbols in a case of a bandwidth larger than 10RB, and may be the second, third and fourth OFDM symbols in a case of a bandwidth smaller than or equal to 10RB.

In this embodiment, specifically, the size of the control part for transmitting the control information in the frame corresponding to the secondary component carrier may be for example decreased to one or two control symbols. Alternatively, the control part in the frame corresponding to the secondary component carrier may be cancelled so that the frame corresponding to the secondary component carrier only includes the data content.

In this way, it enables the frame corresponding to the secondary component carrier to carry more data content, and thus the efficiency of data transmission may be further improved.

Next, at step S406, the cross-carrier scheduling may be performed. Specifically, the cross-carrier scheduling is performed by utilizing the control information included in the control part in the frame corresponding to the primary component carrier.

It can be seen from the foregoing embodiments that by correspondingly decreasing the size of the control part in the frame corresponding to the secondary component carrier to enable the frame corresponding to the secondary component carrier to carry more data content, the efficiency of data transmission can be further improved.

In another embodiment of the invention, the method of cross-carrier scheduling may further include a processing of configuring a physical format indication channel, in which a part of the physical format indication channel carries information for indicating the size of the control part in the frame corresponding to the primary component carrier.

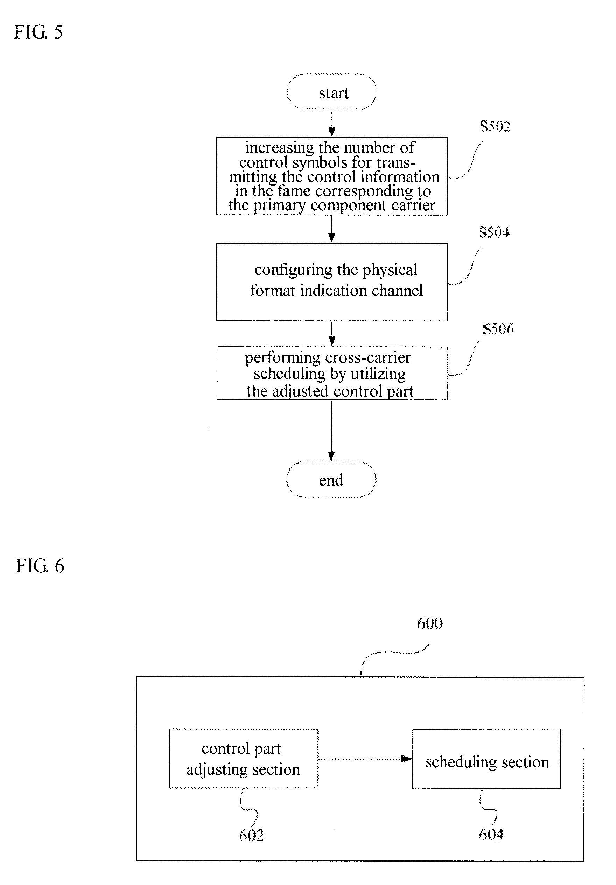

Fig.5 is a flow chart illustrating a method of cross-carrier scheduling according to an embodiment of the invention.

As shown in Fig.5, at step S502, the number of control symbols for transmitting the control information in the frame corresponding to the primary component carrier may be increased.

The processing of step S502 may be similar to those of steps S302 and S402 described previously, and no repeated description will be made herein to keep the specification to be concise.

Next, at step S504, the physical format indication channel is configured so that it may indicate the number of control symbols in the frame after adjusting.

Next, at step S506, the cross-carrier scheduling is performed by utilizing the adjusted control part.

It can be seen that by re-configuring the physical format indication channel to indicate the number of control symbols in the frame after adjusting, it enables the user to timely determine the size of the control part in the frame corresponding to the primary component carrier after adjusting so as to obtain the control information. Thus, it is possible to facilitate implementation of the cross-carrier scheduling.

In the foregoing method, the physical format indication channel may be re-configured in various suitable manners.

For example, in an embodiment of the invention, the physical format indication channel may be re-configured in a manner of adjusting the number of bits for indicating the number of control symbols in the frame of the physical format indication channel.

In the LTE-A R8 standard, the number of control symbols in the frame corresponding to the primary component carrier is three, and the number of bits for indicating the number of control symbols in the frame in the physical format indication channel is 2. Specifically, these 2 bits have four combinations in total, in which one combination is preserved, while the other three combinations may indicate situations in which the number of control symbols in the frame is 1, 2 and 3 respectively. For example, the combination of 00 is preserved, and the combinations of 01, 10 and 11 indicate the situations in which the number of control symbols in the frame is 1, 2 and 3 respectively.

In a case that the number of control symbols in the frame corresponding to the primary component carrier is increased to 3 or more, the size of 2 bits is insufficient for indicating the number of control symbols in the frame.

To enable indication of the number of control symbols in the frame, in this embodiment, the physical format indication channel may be re-configured correspondingly according to the number of control symbols in the frame corresponding to the primary component carrier. Specifically, the number of bits for indicating the number of control symbols in the frame in the physical format indication channel may be increased so that the adjusted physical format indication channel may indicate the increased number of control symbols in the frame corresponding to the primary component carrier.

For example, when the number of control symbols in the frame corresponding to the primary component carrier is increased to 6, the number of bits for indicating the number of control symbols in the physical format indication channel may be adjusted to be 3 correspondingly. In this case, for example, the combination of 000 is preserved, and the combinations of 001, 010, 011, 100, 101, 110 and 111 indicate situations in which the number of control symbols in the frame is 1, 2, 3, 4, 5, 6 and 7 respectively.

Particularly, an indication range of the adjusted physical format indication channel with respect to the number of control symbols in the frame corresponding to the primary component carrier is 1-7. For example, when the bits for indicating the number of control symbols in the frame corresponding to the primary component carrier in the physical format indication channel are in a state of 110, it indicates that currently the number of control symbols in the frame corresponding to the primary component carrier is 6.

Further, the foregoing processing of re-configuring the physical format indication channel by adjusting the number of bits of a relevant part (a part for indicating the number of control symbols in the fame corresponding to the primary component carrier) of the physical format indication channel is merely an example, and the invention is not limited thereto. For example, in another embodiment of the invention, it is also possible to re-configure the physical format indication channel in a manner of re-setting the indication range of the relevant part of the physical format indication channel.

As described above, in the LTE-A R8 standard, resources occupied by the part for indicating the number of control symbols in the frame corresponding to the primary component carrier of the physical format indication channel have a size of 2 bits, and its indication range includes 1-3 control symbols.

In a case that the number of control symbols in the frame corresponding to the primary component carrier is increased to 3 or more, the indication range of the part for indicating the number of control symbols in the frame corresponding to the primary component carrier of the physical format indication channel (i.e., the 2 bits) may be adjusted correspondingly, while these 2 bits are still used to indicate the number of control symbols.

For example, when the number of control symbols in the frame corresponding to the primary component carrier is increased to 6, the 2 bits in the physical format indication channel may be used to indicate the number of control symbols. Specifically, for example, the indication range of these 2 bits in the physical format indication channel may be set to be 4-6. For example, among four combinations of the 2 bits, the combination of 00 is preserved, and the combinations of 01, 10 and 11 may indicate cases in which the number of control symbols in the frame is 4, 5 and 6 respectively.

Thus, it is possible to use only 2 bits to indicate more control symbols without increasing the occupied resources by re-configuring the indication range of the relevant part of the physical format indication channel.

The above two manners of configuring the physical format indication channel are also merely examples, and the invention is not limited thereto. For example, in yet another embodiment of the invention, in a case that the frame corresponding to the primary component carrier only includes the control symbols and includes no data content, the resources occupied by the relevant part (a part for indicating the number of control symbols in the frame corresponding to the primary component carrier) in the physical format indication channel are also released directly.

Specifically, in a case that the frame corresponding to the primary component carrier only includes control symbols, that is, in a case that there is a component carrier dedicatedly for transmitting the control information, the user may directly obtain the control information from the frame corresponding to this carrier without obtaining the number of the control information through the relevant part of the physical format indication channel, and thus it is possible not to use the relevant part (a part for indicating the number of control symbols in the frame corresponding to the primary component carrier) in the physical format indication channel.

In this case, the resources occupied by the relevant part (a part for indicating the number of control symbols in the frame corresponding to the primary component carrier) in the physical format indication channel may be released so that the resources used in the cross-carried scheduling can be further saved.

In addition to the method described above, the invention further provides a device of cross-carrier scheduling.

Fig.6 is a schematic diagram illustrating a device of cross-carrier scheduling according to an embodiment of the invention.

As shown in Fig.6, the device of cross-carrier scheduling according to the embodiment of the invention includes a control part adjusting section 602 and a scheduling section 604.

The control part adjusting section 602 may adjust the size of the control part for transmitting the control information in the frame corresponding to the component carrier. Specifically, sizes of the control parts of one or more of frames corresponding to component carriers may be adjusted according to the number of component carriers involved in the cross-carrier scheduling. For example, the control part adjusting section 602 may adjust the size of the control part in the frame corresponding to the primary component carrier according to the number of component carriers involved in the cross-carrier scheduling.

Further, the scheduling section 604 may perform the cross-carrier scheduling by utilizing the adjusted control part.

Specifically, the scheduling section 604 may transmit the control information for controlling each frame by utilizing the adjusted control part in the frame corresponding to the primary component carrier, thereby realizing the cross-carrier scheduling.

It can be seen that in the device of cross-carrier scheduling according to the above embodiment, by adjusting the size of the control part in the frame corresponding to the primary component carrier according to the number of component carriers, it is possible to make the control part in the frame corresponding to the primary component carrier adapt to the number of component carriers involved in the cross-carrier scheduling.

Thus, it is possible to avoid the congestion condition resulted from the size of the control part in the frame being small while the number of the scheduled component carriers being large during the cross-carrier scheduling.

In the device of cross-carrier scheduling described above, the control part adjusting section 602 may adjust the size of the control part for transmitting the control information in the frame by adjusting the number of control symbols in the frame.

For example, in one embodiment of the invention, the control part adjusting section may include an increasing section, which may increase the number of control symbols for transmitting the control information in the frame corresponding to the primary component carrier.

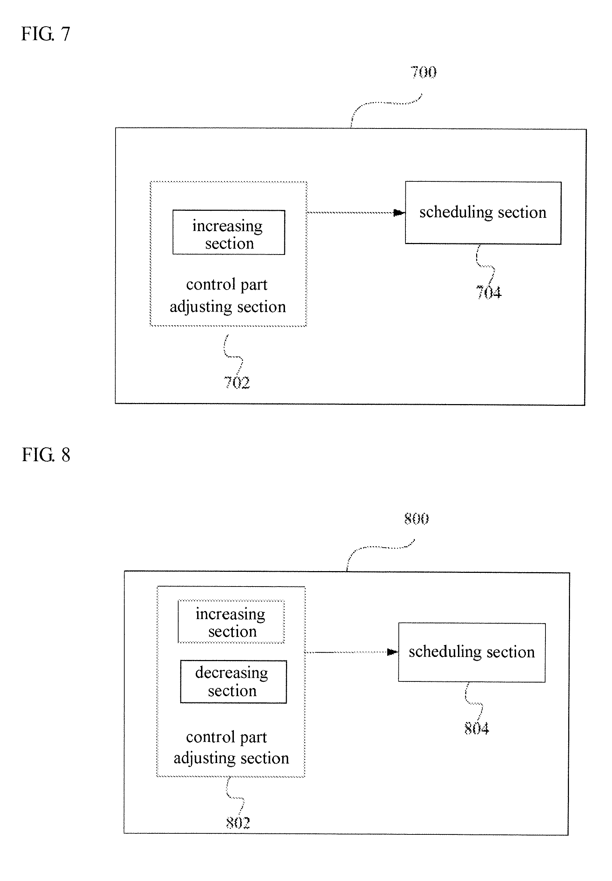

Fig.7 is a schematic diagram illustrating a device of cross-carrier scheduling according to an embodiment of the invention.

As shown in Fig.7, a device of cross-carrier scheduling 700 includes a control part adjusting section 702 and a scheduling section 704.

Particularly, the control part adjusting section 702 includes an increasing section, which may increase the number of control symbols for transmitting the control information in the frame corresponding to the primary component carrier.

Preferably, the increasing section may increase the number of control symbols included in the control part in the frame to be 3 or more, for example, the number of control symbols may be increased to 4, 5, 6, 7 or other integer larger than 3.

As one example, the increasing section may increase length of the control part in the frame to be the length of the whole frame. That is to say, the frame only includes control symbols (for example, OFDM symbols) for transmitting the control information and includes no data content. Correspondingly, the component carrier corresponding to this frame is a component carrier dedicatedly for transmitting the control information.

Returning back to Fig.7, the scheduling section 704 performs the cross-carrier scheduling based on the control part adjusted by the control part adjusting section 702.

Specifically, the control information is transmitted by utilizing the control symbols the number of which has been increased in the frame corresponding to the primary component carrier, thereby realizing the cross-carrier scheduling.

In the device of cross-carrier scheduling described above, since the number of control symbols in the control part has been increased, the control part may transmit more control information, and thus more component carriers may be scheduled, and it is possible to avoid the situation of congestion resulted from no resources being used to transmit the control information.

In another embodiment of the invention, in the device of cross-carrier scheduling according to the invention, the control part adjusting section may further include a decreasing section which may correspondingly decrease the size of the control part for transmitting the control information in the frame corresponding to the secondary component carrier.

Fig.8 is a schematic diagram illustrating a device of cross-carrier scheduling according to an embodiment of the invention.

As shown in Fig.8, a device of cross-carrier scheduling 800 includes a control part adjusting section 802 and a scheduling section 804. Particularly, the control part adjusting section 802 may include an increasing section and a decreasing section.

Particularly, the increasing section may be similar to the increasing section described previously, and no repeated description will be made herein to keep the specification to be concise.

The decreasing section in the control part adjusting section 802 may correspondingly adjust the size of the control part for transmitting the control information in the frame corresponding to the secondary component carrier.

Specifically, in a case that the increasing section has increased the number of control symbols for transmitting the control information in the frame corresponding to the primary component carrier, the decreasing section may correspondingly decrease the size of the control part for transmitting the control information in the frame corresponding to the secondary component carrier.

For example, the decreasing section may decrease the size of the control part for transmitting the control information in the frame corresponding to the secondary component carrier to include one control symbol bit or two control symbol bits. Alternatively, the control part in the frame corresponding to the secondary component carrier may also be cancelled so that the frame corresponding to the secondary component carrier only includes data content.

In this way, it is possible to enable the frame corresponding to the secondary component carrier to carry more data content, and thus the efficiency of data transmission may be further improved.

Returning back to Fig.8, the scheduling section 804 performs the cross-carrier scheduling based on the control part adjusted by the control part adjusting section 802.

Specifically, the scheduling section 804 utilizes the control information transmitted by the control symbols the number of which has been increased by the increasing section in the frame corresponding to the primary component carrier to perform cross-carrier scheduling.

It can be seen that in the foregoing device, the decreasing section correspondingly decreases the size of the control part in the frame corresponding to the secondary component carrier so that the frame corresponding to the secondary component carrier may carry more data content, and thus the efficiency of data transmission may be further improved.

In another embodiment of the invention, the device of cross-carrier scheduling may further include a physical format indication channel adjusting section which may configure the physical format indication channel to adapt to the number of control symbols in the control part after adjusting. Particularly, the physical format indication channel includes a part for indicating the size of the control part in the frame corresponding to the primary component carrier.

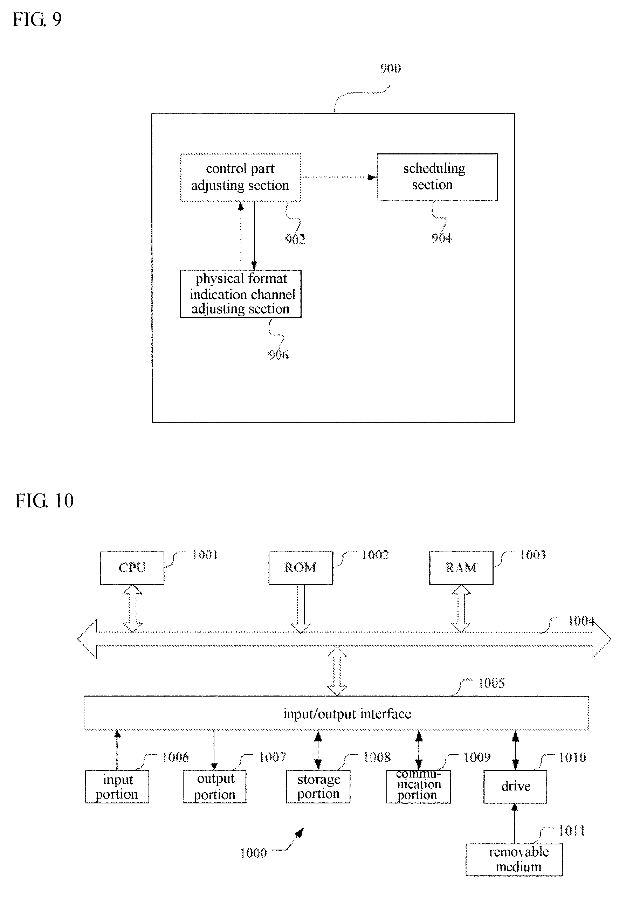

Fig.9 is a schematic diagram illustrating a device of cross-carrier scheduling according to an embodiment of the invention.

As shown in Fig.9, a device of cross-carrier scheduling 900 may include a control part adjusting section 901, a scheduling section 904 and a physical format indication channel adjusting section 906.

Particularly, specific structures and functions of the control part adjusting section 902 and the scheduling section 904 may be respectively similar to those of the control part adjusting section and scheduling section described previously, and no repeated description will be made herein to keep the specification to be concise.

As shown in Fig.9, the physical format indication channel adjusting section 906 may re-configure the physical format indication channel to adapt to the number of control symbols in the frame corresponding to the primary component carrier after adjusting.

It can be seen that by re-configuring the physical format indication channel to adapt to the number of control symbols in the frame corresponding to the primary component carrier after adjusting, it enables the user to timely determine the size of the control part in the frame corresponding to the primary component carrier after adjusting so as to obtain the control information. Thus, it is possible facilitate implementation of cross-carrier scheduling.

In the device described above, the physical format indication channel adjusting section 906 may re-configure the physical format indication channel in various suitable manners.

For example, in an embodiment of the invention, the physical format indication channel adjusting section may re-configure the physical format indication channel in a manner of adjusting the number of bits of the relevant part (a part for indicating the number of control symbols in the frame corresponding to the primary component carrier) of the physical format indication channel.

In the LTE-A R8 standard, the number of control symbols in the frame corresponding to primary component carrier is 3, and the size of the part for indicating the number of control symbols in the frame of the physical format indication channel is 2 bits.

Specifically, these 2 bits have four combinations in total, in which one combination is preserved, and other three combinations may indicate the situations in which the number of the control symbols in the frame is 1, 2 and 3 respectively. For example, the combination of 00 is preserved, and combinations of 01, 10 and 11 indicate the situations in which the number of control symbols in the frame is 1, 2 and 3 respectively.

In a case that the number of control symbols in the frame corresponding to the primary component carrier is increased to 3 or more, the relevant part (a part for indicating the number of control symbols in the frame corresponding to the primary component carrier) of the physical format indication channel whose size is 2 bits is insufficient for indicating the number of control symbols in the frame.

To enable indication of the number of control symbols in the frame, in the present embodiment, the physical format indication channel adjusting section may correspondingly adjust the size of the relevant part (a part for indicting the number of control symbols in the frame corresponding to the primary component carrier) of the physical format indication channel according to the number of control symbols in the frame corresponding to the primary component carrier, so that the adjusted relevant part (a part for indicting the number of control symbols in the frame corresponding to the primary component carrier) of the physical format indication channel may indicate the increased number of control symbols in the frame corresponding to the primary component carrier.

For example, when the number of control symbols in the frame corresponding to the primary component carrier is increased to 6, the physical format indication channel adjusting section may correspondingly adjust the size of the relevant part (a part for indicting the number of control symbols in the frame corresponding to the primary component carrier) of the physical format indication channel to be 3 bits. In this case, for example, the combination of 000 is preserved, and the combinations of 001,010, 011, 100, 101, 110 and 111 indicate the situations in which the number of control symbols in the frame is 1, 2, 3, 4, 5, 6 and 7 respectively.

Further, in another embodiment of the invention, the physical format indication channel adjusting section may also re-configure the physical format indication channel in a manner of re-setting the indication range of the relevant part (a part for indicting the number of control symbols in the frame corresponding to the primary component carrier) of the physical format indication channel.

As described above, in the LTE-A R8 standard, the resources occupied by the part for indicating the number of control symbols in the frame corresponding to the primary component carrier of the physical format indication channel have a size of 2 bits, and its indication range includes 1-3 control symbols.

In a case that the number of control symbols in the frame corresponding to the primary component carrier has been increased to 3 or more, the physical format indication channel adjusting section may correspondingly adjust the indication range of the relevant part (a part for indicting the number of control symbols in the frame corresponding to the primary component carrier) without changing the size of the part.

For example, when the number of control symbols in the frame corresponding to the primary component carrier has been increased to 6, the physical format indication channel adjusting section may use 2 bits and change the indication range of the 2 bits to indicate the number of control symbols.

Specifically, the physical format indication channel adjusting section may use 2 bits in the physical format indication channel to indicate control symbols in a range of 4-6. For example, in four combinations of these 2 bits, the combination of 00 is preserved, and the combinations of 01, 10 and 11 indicate the number of control symbols in the frame is 4, 5 and 6 respectively.

Thus, the physical format indication channel adjusting section may still use 2 bits in the physical format indication channel to indicate more control symbols without increasing the occupied resources by re-configuring the indication range of the relevant part (a part for indicting the number of control symbols in the frame corresponding to the primary component carrier) of the physical format indication channel.

The above two manners of configuring the physical format indication channel are also merely examples, and the invention is not limited thereto. For example, in yet another embodiment of the invention, in a case that the frame corresponding to the primary component carrier only includes control symbols and includes no data content, the physical format indication channel adjusting section may also configure the physical format indication channel in other manners.

In a case that the frame corresponding to the primary component carrier only includes the control symbols, that is, in a case that there is a component carrier dedicatedly for transmitting the control information, the user may directly obtain the control information from the frame corresponding to this carrier without obtaining the information according to the indication of the physical format indication channel, and thus it is possible not to use the relevant part (a part for indicting the number of control symbols in the frame corresponding to the primary component carrier) of the physical format indication channel.

In this case, the physical format indication channel adjusting section may release the bits occupied by the relevant part (a part for indicting the number of control symbols in the frame corresponding to the primary component carrier) of the physical format indication channel, so that the resources used in the cross-carrier scheduling can be further saved.

Further, the invention also provides a base station including the device of cross-carrier scheduling according to any of the foregoing embodiments.

Thus, in a case that the number of component carriers in the cross-carrier scheduling is large, this base station may avoid the situation of congestion resulted from no resources being used to transmit the control information.

Further, the invention further provides a communication terminal which can receive information from the base station described above. Particularly, after receiving the information from the base station, the communication terminal may obtain the data content by receiving the control information in the frame corresponding to the primary component carrier.

Thus, in a case that the number of component carriers in the cross-carrier scheduling is large, this communication terminal may avoid the situation of congestion resulted from no resources being used to transmit the control information.

Furthermore, the invention also provides a communication system including at least one base station and at least one communication terminal, in which the base station may include the device of cross-carrier scheduling according to any of the foregoing embodiments, and the communication terminal may include the device of cross-carrier scheduling according to any of the foregoing embodiments.

Thus, in this communication system, in a case that the number of component carriers in the cross-carrier scheduling is large, it is possible to avoid the situation of congestion resulted from no resources being used to transmit the control information.

Further, it should be understood that various examples and embodiments described herein are all exemplary, and the invention is not limited thereto. In the specification, the expressions such as "first", "second" or the like are only used to literally distinguish the described features so as to clearly describe the invention. Therefore, they should not be considered as having any limiting meanings.

Respective constituent modules and units in the foregoing device may be configured in a manner of software, firmware, hardware or combinations thereof. Specific means or manners usable for the configuration are well-known to those skilled in the art and no description will be made herein. In a case of implementation through the software or firmware, programs constituting the software are installed from a storage medium or a network to a computer with a dedicated hardware structure (e.g., a general-purpose computer 1000 as shown in Fig.10) which is capable of executing various functions or the like when installed with various programs.

In Fig.10, a central processing unit (CPU) 1001 executes various processing in accordance with programs stored in a read only memory (ROM) 1002 or programs loaded from a storage portion 1008 to a random access memory (RAM) 1003. Data required for the CPU 1001 to execute various processes or the like is also stored in the RAM 1003 as required. The CPU 1001, the ROM 1002 and the RAM 1003 are connected to one another via a bus 1004. An input/output interface 1005 is also connected to the bus 1004.

The following components are connected to the input/output interface 1005: an input portion 1006 including a keyboard, a mouse, or the like; an output portion 1007 including a display such as a cathode ray tube (CRT), a liquid crystal display (LCD), or the like and a speaker or the like; the storage portion 1008 including a hard disk or the like; and a communication portion 1009 including a network interface card such as a LAN card, a modem, or the like. The communication portion 1009 performs communication processing via the network such as Internet. A drive 1010 is also connected to the input/output interface 1005 as required. A removable medium 1011, such as a magnetic disk, an optical disk, a magneto optical disk, a semiconductor memory or the like, is mounted on the drive 1010 as required, so that computer programs read therefrom are installed into the storage portion 1008 as required.

In a case that the above-described series of processing are implemented by the software, the programs that constitute the software are installed from the network such as the Internet or the storage medium such as the removable medium 1011.

Those skilled in the art should understand that this storage medium is not limited to the removable medium 1011 in which programs are stored and which is distributed separately from the device so as to provide programs to the user as shown in Fig. 10. Examples of the removable medium 1011 include the magnetic disk (including floppy disk (registered trade mark)), the optical disk (including compact disk-read only memory (CD-ROM) and digital versatile disk (DVD)), the magneto optical disk (including mini disk (MD) (registered trade mark)) and the semiconductor memory. Alternatively, the storage medium may be the ROM 1002, the hard disk contained in the storage portion 1008 or the like, in which programs are stored and which are distributed to the user together with the device containing them.

The invention also proposes a program product storing machine readable instruction codes which when read and executed by the machine, may carry out the above method according to the embodiments of the invention.

Accordingly, a storage medium on which the above program product storing the machine readable instruction codes is carried is also included in the disclosure of the invention. The storage medium includes but not limited to the floppy disk, optical disk, magneto optical disk, storage card, storage stick or the like.

Finally, it shall be further noted that the terms "comprise", "include" or any other variation thereof are intended to cover a non-exclusive inclusion, so that a process, method, article, or device that comprises a list of elements includes not only those elements but also other elements not explicitly listed or inherent to such process, method, article, or device. Unless further defined, a sentence "comprises a/an..." which defines an element does not preclude the existence of additional identical element(s) in the process, method, article, or device that comprises the element.

Although the embodiments of the invention have been described above in detail in conjunction with the accompanying drawings, it should be understood that the above described implementations are only used to describe the invention and should not be constructed as any limitation on the invention. Various modifications, combinations and alternations may be made to the foregoing embodiments by those skilled in the art without departing from the essence and scope of the invention. Therefore, the scope of the invention is defined only by the appended claims and equivalent meanings thereof.

## Claims

1. A method of cross-carrier scheduling, comprising:
adjusting a size of a control part for transmitting control information in a frame corresponding to a component carrier, according to the number of component carriers involved in the cross-carrier scheduling; and
performing the cross-carrier scheduling by utilizing the adjusted control part.

2. The method according to claim 1, wherein the processing of adjusting the size of the control part for transmitting the control information in the frame corresponding to the component carrier comprises increasing the number of control symbols for transmitting the control information in a frame corresponding to a primary component carrier.

3. The method according to claim 2, wherein the number of control symbols for transmitting the control information in the frame corresponding to the primary component carrier is increased to be larger than 3.

4. The method according to claim 2, wherein the processing of adjusting the size of the control part for transmitting the control information in the frame corresponding to the component carrier comprises correspondingly decreasing the number of control symbols for transmitting the control information in a frame corresponding to a secondary component carrier.

5. The method according to claim 4, wherein the processing of correspondingly decreasing the number of control symbols for transmitting the control information in the frame corresponding to the secondary component carrier comprises decreasing the number of control symbols for transmitting the control information in the frame corresponding to the secondary component carrier so that one or more of frames corresponding to secondary component carriers has no control symbol.

6. The method according to claim 2, further comprising configuring a physical format indication channel according to the number of control symbols for transmitting the control information in the frame corresponding to the primary component carrier.

7. The method according to claim 6, wherein the processing of configuring the physical format indication channel comprises adjusting the number of bits for indicating the number of control symbols in the physical format indication channel.

8. The method according to claim 6, wherein the processing of configuring the physical format indication channel comprises adjusting an indication range with respect to the number of control symbols of the physical format indication channel.

9. The method according to claim 1, wherein the processing of adjusting the size of the control part for transmitting the control information in the frame corresponding to the component carrier comprises increasing the number of control symbols for transmitting the control information in a frame corresponding to a primary component carrier so that the frame only has control symbols for transmitting the control information.

10. The method according to claim 9, wherein the processing of adjusting the size of the control part for transmitting the control information in the frame corresponding to the component carrier further comprises correspondingly decreasing the number of control symbols for transmitting the control information in a frame corresponding to a secondary component carrier.

11. The method according to claim 10, wherein the processing of correspondingly decreasing the number of control symbols for transmitting the control information in the frame corresponding to the secondary component carrier further comprises decreasing the number of control symbols for transmitting the control information in the frame corresponding to the secondary component carrier so that one or more of frames corresponding to secondary component carriers has no control symbol.

12. The method according to claim 9, further comprising releasing resources occupied by a part for indicating the number of control symbols in a physical format indication channel.

13. A device of cross-carrier scheduling comprising:
a control part adjusting section configured to adjust a size of a control part for transmitting control information in a frame corresponding to a component carrier, according to the number of component carriers involved in the cross-carrier scheduling; and
a scheduling section configured to perform the cross-carrier scheduling by utilizing the adjusted control part.

14. The device according to claim 13, wherein the control part adjusting section comprises an increasing section configured to increase the number of control symbols for transmitting the control information in a frame corresponding to a primary component carrier.

15. The device according to claim 14, wherein the increasing section is configured to increase the number of control symbols for transmitting the control information in the frame corresponding to the primary component carrier to be larger than 3.

16. The device according to claim 14, wherein the control part adjusting section further comprises a decreasing section configured to correspondingly decrease the number of control symbols for transmitting the control information in a frame corresponding to a secondary component carrier.

17. The device according to claim 16, wherein the decreasing section is further configured to decrease the number of control symbols for transmitting the control information in the frame corresponding to the secondary component carrier so that one or more of frames corresponding to secondary component carriers has no control symbol.

18. The device according to claim 14, further comprising a physical format indication channel adjusting section configured to configure a physical format indication channel according to the number of control symbols for transmitting the control information in the frame corresponding to the primary component carrier.

19. The device according to claim 18, wherein the physical format indication channel adjusting section is configured to adjust the number of bits for indicating the number of control symbols in the physical format indication channel.

20. The device according to claim 18, wherein the physical format indication channel adjusting section is configured to adjust an indication range with respect to the number of control symbols of the physical format indication channel.

21. The device according to claim 14, wherein the increasing section is further configured to increase the number of control symbols for transmitting the control information in the frame corresponding to the primary component carrier so that the frame only has control symbols for transmitting the control information.

22. The device according to claim 21, further comprising a decreasing section configured to decrease the number of control symbols for transmitting the control information in a frame corresponding to a secondary component carrier.

23. The device according to claim 22, wherein the decreasing section is further configured to decrease the number of control symbols for transmitting the control information in the frame corresponding to the secondary component carrier so that one or more of frames corresponding to secondary component carriers has no control symbol.

24. The device according to claim 21, further comprising a physical format indication channel adjusting section configured to release resources occupied by a part for indicating the number of control symbols in a physical format indication channel.

25. A program product comprising a machine executable instruction which when executed in an information processing apparatus causes the information processing apparatus to execute the method according to any one of claims 1-12.

26. A storage medium comprising machine readable program codes which when executed in an information processing apparatus cause the information processing apparatus to execute the method according to any one of claims 1-12.

27. A base station comprising the device of cross-carrier scheduling according to any one of claims 13-24.

28. A communication terminal receiving information from the base station according to claim 27,
wherein the communication terminal is configured to obtain data content based on receiving control information in a frame corresponding to a primary component carrier.

29. A communication system comprising at least one base station according to claim 27 and at least one communication terminal according to claim 28.
